# EUROPEAN PATENT SPECIFICATION

(11) **EP 1 440 717 B1**
(45) Date of publication and mention of the grant of the patent: **12.04.2006**
(21) Application number: 04001561.2
(22) Date of filing: 26.01.2004
(51) Int. Cl.: A63F 13/00

(54) **Gaming machine**
Spielautomat
Machine de jeu

(30) Priority: 27.01.2003 JP 2003018037; 27.01.2003 JP 2003018038; 27.01.2003 JP 2003018039; 27.01.2003 JP 2003018040; 27.01.2003 JP 2003018041
(43) Date of publication of application: 28.07.2004
(73) Proprietor: Aruze Corp., Tokyo 135-0063 (JP)
(72) Inventor: Ooto, Takashi, Tokyo 135-0063 (JP)
(74) Representative: HOFFMANN EITLE

(56) References cited:
- EP-A- 0 896 308
- US-A1- 2001 000 636
- US-B1- 6 475 087

## Description

### Field of the Invention

This invention relates to a gaming machine.

### Related Background of the Invention

In recent years, gaming machines such as slot machines have come into fashion, and various types of gaming machines have been developed by gaming machine manufacturers.

Such a gaming machine is provided with a display device on its cabinet, and various images including images showing contents of games and attractive images are displayed on the display device. Thus, display devices for gaming machines have become indispensable for gaming machines.

The display devices include cathode ray tube (CRT) displays and various types of liquid crystal displays such as super-twisted nematic transistor (STN) type ones and thin film transistor (TFT) type ones. Such a display is mounted inside the cabinet of a gaming machine in such a manner that the display is protruding inside of the gaming machine, and hence a thinner liquid crystal display has been in the mainstream for the purpose of securing parts installation space in a gaming machine as well (see Japanese Patent Application Laid-Open No. 2002-272903, for example).
US-A-6,475,087 discloses a gaming machine comprising a cabinet, a door supported by the cabinet, a liquid crystal display and a support for supporting the liquid crystal display.

### SUMMARY OF THE INVENTION

Incidentally, it has been requested that such a display device is mounted on a reclosable front door provided at the front of a gaming machine.

However, a liquid crystal display is so structured that electrodes and liquid crystal film are disposed between thin plates such as glass plates, thus being sensitive to the stress of its torsion or strain, and easy to be broken accordingly when such stress is applied. Since a liquid crystal display is thinner in comparison with the proportion of the display area to the whole area, the stress of torsion or strain applied to it must be especially considered.

On the other hand, the front door of a gaming machine is so structured in a flat shape that the control panel and the like of the gaming machine are mounted on the frame fixed to the cabinet through a hinge mechanism. Thus, the front door is easy to be twisted or trained by its own weight or externally applied force in its open state.

In addition, the front door is opened and closed frequently for the purpose of ordinary maintenance such as setting the operation of the gaming machine and taking out the medals stored in the gaming machine. Impact force generated when the front door having a considerable weight is opened or closed is transferred not only to the cabinet of the gaming machine but also to the door itself. When a liquid crystal display is mounted on this front door, the liquid crystal display may be broken easily.

It is therefore an object of the present invention to provide a gaming machine which is so structured that a liquid crystal display is mounted on the front door so as not to be broken easily when the door is opened or closed.
This object is solved by a gaming machine having the features of claim 1 or 13. Further embodiments of the present invention are defined in the dependent claims.

A gaming machine according to the present invention comprises (a) a cabinet, (b) a door openably and reclosably supported by the cabinet, (c) a liquid crystal display unit which is supported by the door and an image associated with a game, (d) a transparent member which is supported by the door, and (e) a buffer provided between the liquid crystal display unit and the door.

According to the present invention, the buffer is provided between the door and the liquid crystal display unit, thus reducing the energy caused by the impact force generated when the door is opened or closed. Consequently, in the gaming machine according to the present invention, the liquid crystal display unit is not broken easily.

In the gaming machine according to the present invention, the door may include a frame supporting the liquid crystal display unit through the buffer. The liquid crystal display unit is supported by the frame at a back thereof The buffer can keep a distance between the liquid crystal display unit and the transparent member.

In this configuration, the buffer prevents the liquid crystal display unit from being broken easily. The transparent member is disposed apart from the front of the liquid crystal display unit, thereby protecting the liquid crystal display unit. Further, the manufacturing error of the liquid crystal display unit or frame is absorbed by the buffer, and the gaming machine can be thus assembled.

In the gaming machine according to the present invention, the buffer may have a first groove in which the liquid crystal display unit is inserted and a second groove distant from the first groove, in which the transparent member is inserted. According to this configuration, the liquid crystal display unit and the transparent member can be protected by the single buffer. Moreover, the buffer has the first groove and second groove distant from each other, and thereby the liquid crystal display unit and the transparent member can be easily mounted to the frame keeping a distance therebetween.

In the gaming machine according to the present invention, the door may include a frame supporting the liquid crystal display unit through the buffer. The liquid crystal display unit is supported by the frame at a back thereof. The buffer may be in contact with the liquid crystal display unit and the frame. In this configuration too, the buffer is able to reduce the energy caused by the impact force generated when the door is opened or closed. Thus, the liquid crystal display unit is not broken easily.

In the gaming machine according to the present invention, an end face of the liquid crystal display unit has a hollow extending in a direction perpendicular to the end face, the buffer has a projection of which shape corresponds to a shape of the hollow, and the projection can be inserted in the hollow. According to this configuration, the buffer can be easily mounted to the liquid crystal display unit by inserting the projection in the hollow without any tool required in case of screwing or the like.

In the gaming machine according to the present invention, the door may include a frame supporting the liquid crystal display unit through the buffer. The liquid crystal display unit is supported by the frame at a back thereof. The liquid crystal display unit may have at least one projection on an end face thereof. The projection projects in a direction perpendicular to the end face. The buffer covers the projection.

In this configuration too, the buffer is able to reduce the energy caused by the impact force generated when the door is opened or closed. Consequently, the liquid crystal display unit is not broken easily. Furthermore, the manufacturing error of the liquid crystal display unit or frame is absorbed by the buffer, and the liquid crystal display unit can be thus mounted to the frame.

In the gaming machine according to the present invention, the frame preferably has a hole in which the buffer is set. When the liquid crystal display unit is set in the frame from the front of the door, the projection covered with the buffer can be guided along the hole of the frame, and thereby the liquid crystal display unit can be easily mounted to the frame.

The gaming machine according to the present invention may further comprise a second buffer. The transparent member has at least one corner, which can be covered with the second buffer. According to this configuration, impact, vibration, etc. traveling to the transparent member can be weakened by the second buffer.

In the gaming machine according to the present invention, the frame preferably has a recess in which the liquid crystal display unit held by the buffer is set. According to this configuration, the liquid crystal display unit can be set in the recess, thus being easily mounted to the frame. Further, it is not required to fasten the liquid crystal display unit to the frame by screws or the like.

In the gaming machine according to the present invention, the door may include a frame supporting the liquid crystal display unit through the buffer. The liquid crystal display unit is supported by the frame at a back thereof. The liquid crystal display unit may have at least one projection on an end face thereof. The projection projects in a direction perpendicular to the end face. The buffer holds the projection.

According to this configuration, the liquid crystal display unit is mounted to the frame through the buffer holding the projection so that the energy caused by the impact force generated when the door is opened or closed can be reduced by the buffer. Consequently, the liquid crystal display unit is not broken easily.

In the gaming machine according to the present invention, the frame may include an outer frame and an inner frame which is fixed to the outer frame. The buffer is fixed to the inner frame. According to this configuration, the liquid crystal display unit with the buffer is previously fixed to the inner frame and then the inner frame can be mounted to the outer frame fixed to the cabinet, and thereby the mounting of the liquid crystal display unit is easy. Further, the frame has a double-framed construction with the inner frame and the outer frame so that the strength of the door against torsion and strain increases.

In the gaming machine according to the present invention, the door may further include a cover supported by the frame. The cover has an opening at a center thereof, from which the front of the liquid crystal display unit is exposed through the transparent member. A peripheral portion of the liquid crystal display unit is covered by the cover at a front thereof. According to this configuration, the number of parts can be reduced by directly fixing the cover to the frame.

In the gaming machine according to the present invention, the door may include a frame in which the liquid crystal display unit is set at a back thereof, and a cover supported by the frame. The cover has an opening at a center thereof, from which the display unit is exposed through the transparent member. The liquid crystal display unit has at least one projection on an end face thereof. The projection projects in a direction perpendicular to the end face. The buffer holds the projection. The cover covers the peripheral portion of the liquid crystal display unit and supports the liquid crystal display unit through the buffer.

In this configuration too, the buffer is able to reduce the energy caused by the impact force generated when the door is opened or closed. Thus, in this gaming machine too, the liquid crystal display unit is not broken easily.

In the gaming machine according to the present invention, the projection has a holding portion for holding the buffer. The buffer is held by the holding portion. According to this configuration, the buffer can be previously held by the projection of the liquid crystal display unit, thereby being mounted easily to the liquid crystal display unit.

In the gaming machine according to the present invention, the holding portion may include a cutout provided at a tip of the projection. The buffer includes a groove. The groove is shaped in such a way that the width of part of the buffer is equal to the width of the cutout and the width of the groove corresponds to the thickness of the projection. The holding portion can be set in the groove of the buffer. According to this configuration, the projection can be guided by the groove formed in the buffer, and thereby the buffer can be easily mounted to the projection.

The gaming machine according to the present invention further comprise a sealing member. The sealing member is in intimate contact with the peripheral portion of the transparent member and the cover. According to this configuration, the gap between the cover and the transparent member can be sealed with the sealing member, and thereby equipment such as the liquid crystal display unit mounted on the door can be protected against foreign matter. The sealing member can exert its waterproof function for example. The sealing member can also exert its buffer function for the transparent member.

In the gaming machine according to the present invention, the transparent member may be a glass plate or a touch panel. Since the unit price of a glass plate is low, the cost of the component can be cut down. If the transparent member is a touch panel, an input function can be added to the gaming machine.

In the gaming machine according to the present invention, a plurality of buffers each being identical with the buffer are preferably provided. The plurality of buffers can be appropriately disposed according to the size and/or weight of the liquid crystal display unit.

The present invention will be more fully understood from the detailed description given hereinbelow and the attached drawings, which are given by way of illustration only and are not to be considered as limiting the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will be apparent to those skilled in the art from this detailed description.

### BRIEF DESCRIPTION OF THE DRAWINGS

In the course of the following detailed description, reference will be made to the attached drawings in which:
Fig. 1 is a perspective view of a slot machine according to an embodiment of this invention;
Fig. 2 is a perspective view of the slot machine in a state where a door is opened;
Fig. 3 is an exploded perspective view of the liquid crystal display of the first embodiment;
Figs. 4A and 4B are perspective views each showing another type of buffer;
Fig. 5 is a partial cross-sectional view of the liquid crystal display of the first embodiment;
Fig. 6 is an exploded perspective view of the liquid crystal display of the second embodiment;
Fig. 7 is a partial cross-sectional view of the liquid crystal display of the second embodiment;
Fig. 8 depicts the relation between the frame plate and the main frame of the second embodiment;
Fig. 9 is an exploded perspective view of the liquid crystal display of the third embodiment;
Fig. 10 is a perspective view of the transparent member of the third embodiment;
Fig. 11 is a partial cross-sectional view of the liquid crystal display of the third embodiment;
Fig. 12 is an exploded perspective view of the liquid crystal display of the fourth embodiment;
Fig. 13 is a partial cross-sectional view of the liquid crystal display of the fourth embodiment;
Fig. 14 is an exploded perspective view of the liquid crystal display of the fifth embodiment;
Fig. 15 is a partial cross-sectional view of the liquid crystal display of the fifth embodiment; and
Fig. 16 is an exploded perspective view of the liquid crystal display of the sixth embodiment.

### DESCRIPTION OF THE PREFERRED EMBODIMENTS

Preferred embodiments of this invention are described below with reference to the drawings. The embodiments are slot machines to which this invention is applied. This invention is not limited thereto, and may be applied to various gaming machines such as video gaming machines, medal gaming machines, and card gaming machines.

[First Embodiment]

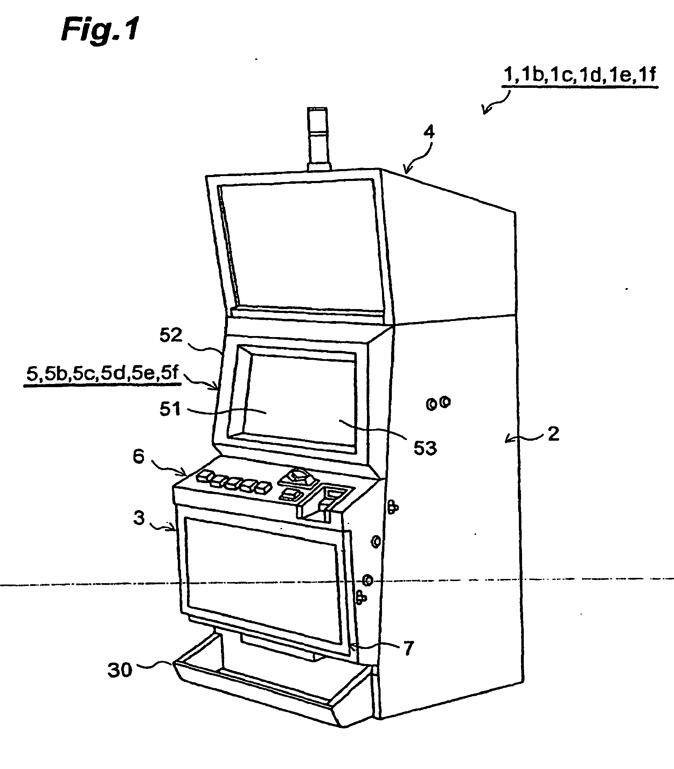

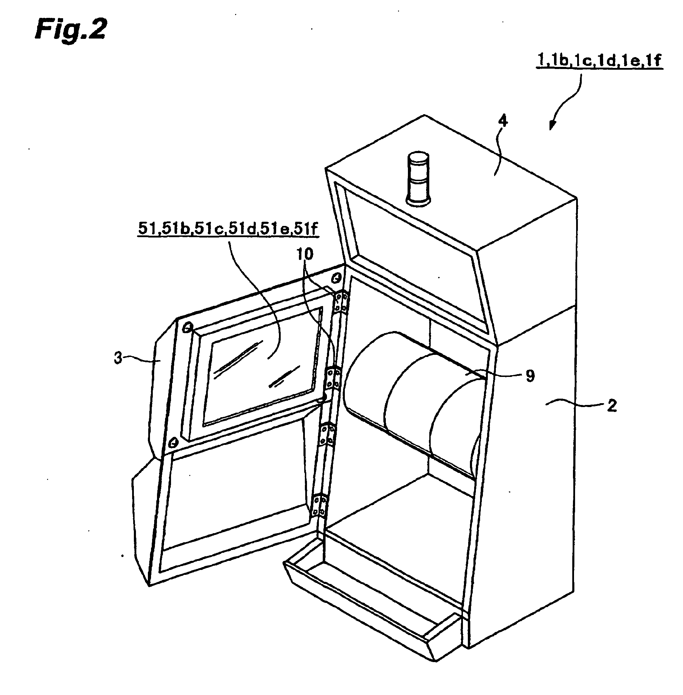

Fig. 1 is a perspective view of a slot machine according to an embodiment of this invention. Fig. 2 is a perspective view of the slot machine having a door opened. Hereinafter, terms showing directions are used on the basis of the state shown in Figs. 1 and 2. That is, on the basis of the state that the slot machine 1 is stood, the direction from a cabinet 2 to a top frame 4 is defined as upward. The direction from the cabinet 2 to a door 3 is defined as forward or front side. The direction from the center of the front side of the cabinet2 to the position where the door 3 is supported is defined as leftward.

The slot machine 1 shown in Figs. 1 and 2 has a cabinet 2. On the opening of the cabinet 2, the door (front door) 3 is openably and reclosably mounted. In this embodiment, the door 3 is fixed to the left edge of the cabinet 2 through a hinge mechanism 10. On the top of the cabinet 2, a top frame 4 is mounted. On the front of the top frame 4, a decorative panel is mounted. Inside the cabinet 2, reels 9 on which symbols are drawn are provided. A position at which the door 3 is supported by the cabinet 2 is not limited to the position of this embodiment. For example, the door 3 may be supported by the upper end portion of the cabinet 2 and opened and closed being rotated about the upper end portion.

A liquid crystal display 5 for displaying game information is mounted in the door 3. A liquid crystal display unit 51 which is a main component of the liquid crystal display 5 is covered with a cover 52 having an opening. That is, the cover 52 has an opening from which the front of the liquid crystal display unit 51 is exposed, and covers the peripheral portion of the liquid crystal display unit 51 at its front. Further, a transparent member 53 for protecting the liquid crystal display unit 51 is mounted to the front of the liquid crystal display unit 51.

On the center front of the door 3, a control panel 6 is disposed so as to protrude forward of the door 3. On the left slope of the control panel 6, various kinds of operating buttons are arranged and a medal insertion slot in which a medal is inserted is provided. On the right side of the control panel 6, a bill guide device for guiding a bill to the bill validator accommodated in the cabinet 2 is provided.

Under the control panel 6, a door component 7 openably and reclosably coupled to the door 3 is provided. The door component 7 is provided with a decorative panel. Under the door component 7 and at the bottom of the door 3, a medal receiving tray 30 for receiving medals is formed.

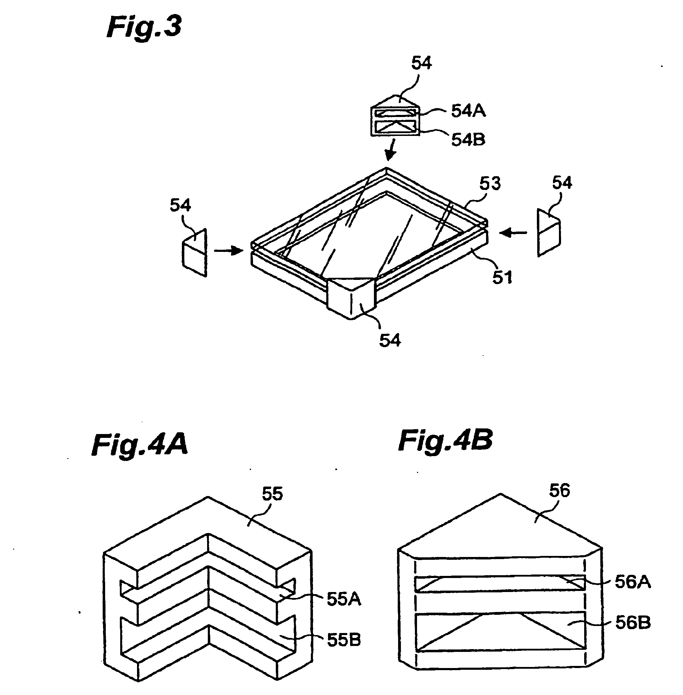

Next, the configuration of the liquid crystal display 5 will be described with reference to Fig. 3. Fig. 3 is an exploded perspective view of the liquid crystal display 5 of the first embodiment.

In the embodiment shown in Fig. 3, the liquid crystal display unit 51 which is a component of the liquid crystal display 5 is formed in a rectangle and in one piece with a display unit and a frame plate surrounding the perimeter of the display unit. The transparent member 53 is a rectangular plate. For the transparent member 53, a glass plate whose material can be got at low price, or a touch panel by which switch functions can be added, may be used.

To the four corners of each of the liquid crystal display unit 51 and the transparent member 53, buffers 54 each being shaped like an isosceles triangular prism are mounted. The buffers 54 are made of natural rubber or synthetic rubber such as chloroprene rubber. The hardness of the buffers 54 are not less than 10 degree and not more than 90 degree. Here, the hardness is International Rubber Hardness Degree measured by constant load test or durometer hardness measured by spring test.

As shown in Fig. 3, in each of the buffers 54, a first groove 54A and a second groove 54B are formed substantially in parallel. The first groove 54A and the second groove 54B are provided apart from each other. The first groove 54A has a width corresponding to the thickness of the transparent member 53, and the second groove 54B has a width corresponding to the thickness of the liquid crystal display unit 51. The buffers 54 cover the four corners of each of the liquid crystal display unit 51 and the transparent member 53. Thus, the liquid crystal display unit 51 and the transparent member 53 can be held as one piece apart from each other.

In the slot machine 1, a product in which the buffers 54 are mounted to the liquid crystal display unit 51 and the transparent member 53 is inserted in the recess 31A of the frame 31 described later. Thus, the manufacturing errors of the liquid crystal display unit 51 and the transparent member 53 or the frame 31 are absorbed by the buffers 54, and the aforementioned product can be thus mounted to the frame 31.

The buffers 54 are thus mounted to the four corners of the liquid crystal display unit 51 and the transparent member 53 in view of assemblability. That is, since the buffers 54 made of rubber have high adhesiveness, the liquid crystal display unit 51 and transparent member 53 with the buffers 54 can be previously assembled as one unit. Consequently, the assembling of the liquid crystal display 5 in the next assembling process becomes easy.

Figs. 4A and 4B are perspective views each showing another type of buffer. The buffer 55 shown in Fig. 4A is made of natural rubber or synthetic rubber such as chloroprene rubber. The buffer 55 is formed in an L-shaped prism. In the buffer 55, a first groove 55A in which a corner of the transparent member 53 is inserted and a second groove 55B in which a corner of the liquid crystal display unit 51 is inserted are formed substantially in parallel. Since the buffer 55 is shaped like a letter L, the areas of the display screen covered with the buffers 55 at the corners of the liquid crystal display unit 51 can be reduced.

The buffer 56 shown in Fig. 4B is made of natural rubber or synthetic rubber such as chloroprene rubber. The buffer 56 is shaped like a generally triangular prism. In the buffer 56, a first groove 56A in which a corner of the transparent member 53 is inserted and a second groove 56B in which a corner of the liquid crystal display unit 51 is inserted are formed substantially in parallel. Since the acute angle edges of the buffer 56 have been cut, the buffer 56 is hard to be broken and deformed.

The buffers 54 are disposed at the four corners of each of the liquid crystal display unit 51 and transparent member 53. However, the buffers 55 or 56 may be appropriately selected according to the sizes or weights of the liquid crystal display unit 51 and transparent member 53 to reduce the number of them to be mounted. In this embodiment, each of the buffers has a first groove and a second groove. However, it may have one groove constituted by communicating a first groove with a second groove. In this case, the frame plate of the liquid crystal display unit 51 is fixed to the peripheral portion of the transparent member 53 so as to be distant from it by a double-coated tape, and the liquid crystal display unit 51 and transparent member fixed to each other by the double-coated tape are inserted in the grooves of the buffers.

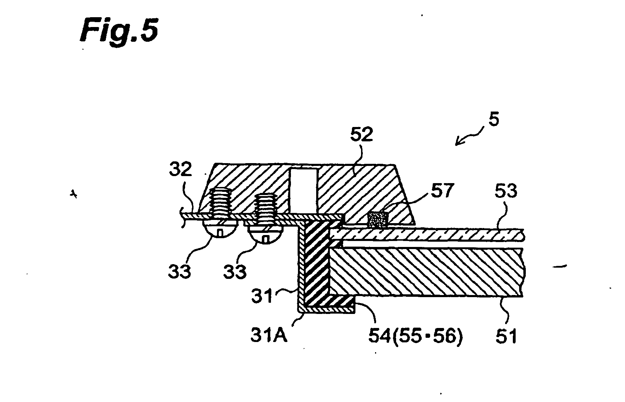

Next, the attachment structure of the liquid crystal display 5 will be described with reference to Fig. 5. Fig. 5 is a partial cross-sectional view of the liquid crystal display 5 of the first embodiment.

As shown in Fig. 5, the frame 31 supports the liquid crystal display unit 51 and transparent member 53 through the buffers 54. The frame 31 has a recess 31A in which the liquid crystal display unit 51 and the transparent member 53 are set. Between the liquid crystal display unit 51 and the inner wall of the recess 31A of the frame 31, and transparent member 53 and this inner wall, the buffers 54 are disposed. In this embodiment, the recess 31A has an opening so that the back of the liquid crystal display unit 51 is visible. Thus, in this embodiment, the peripheral portions of the liquid crystal display unit 51 and the transparent member 53 are supported through the buffers 54 by the frame 31.

The liquid crystal display unit 51, transparent member 53, and the buffers 54 are accommodated in the frame 31 as one piece. The frame 31 is fixed to the cover 52 through the main frame 32 of the door 3 by fastening tools such as screws 33. Thus, the liquid crystal display unit 51 and the transparent member 53 are elastically supported through the frame 31 by the door 3.

Waterproof rubber 57 is embedded in the entire peripheral portion of the surface of the cover 52 opposite to the transparent member 53. The waterproof rubber 57 exerts its buffer function for the transparent member 53 in addition to its essential waterproof function.

As shown in Fig. 5, the cover 52 is fixed to the main frame 32 of the door 3 by screws 33 from the inside of the main frame 32 and is further fixed to the frame 31 through the main frame 32 by screws.

The frame 31, the main frame 32, and the cover 52 are fastened multiply in this way, and thereby it is suppressed that the door 3 is twisted or strained by its own weight or externally applied force. The frame 31 which is sheet metal is formed so as to have a recess in order to accommodate the liquid crystal display unit 51 in the frame 31 and also increase the number of bending points of the frame 31 to cause the frame 31 to resist bending stress and torsion from the viewpoint of structural mechanics. The main frame 32 can be considered as a component of the door 3 and partially a component of the frame 31.

[Second Embodiment]

A slot machine 1b according to the second embodiment comprises, as shown in Fig. 1, a cabinet 3, a door 3, a top frame 4, a control panel 6, a door component 7, and a medal receiving tray 30 which are similar to those of the first embodiment.

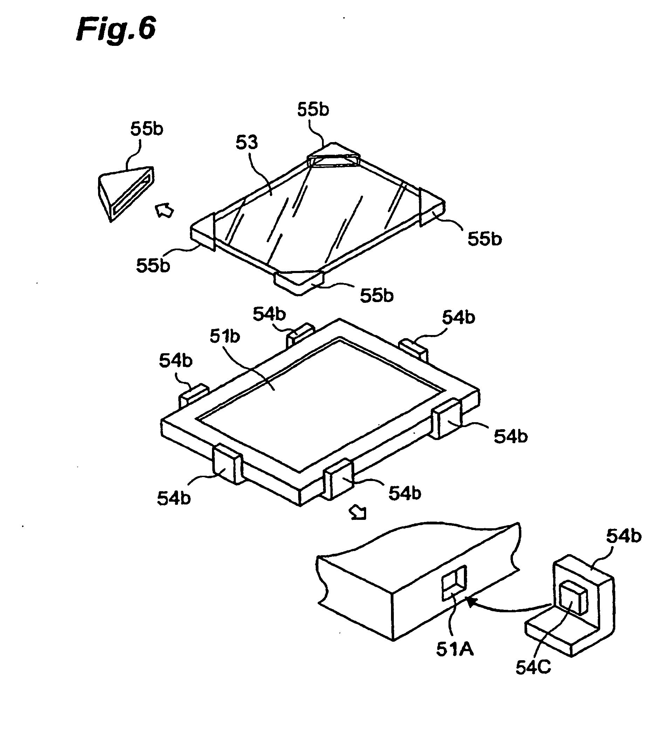

The configuration of the liquid crystal display 5b of the slot machine 1b will be described with reference to Fig. 6, which is an exploded perspective view of the liquid crystal display 5b.

As shown in Fig. 6, the liquid crystal display unit 51b which is a component of the liquid crystal display 5b is formed in one rectangular piece with a display unit and a frame plate surrounding the perimeter of the display unit. On the sides of the liquid crystal display unit 51b, a plurality of first buffers 54b shaped like a letter L are mounted so as be in contact with the liquid crystal display unit 51b.

on the sides of the liquid crystal display unit 51b, rectangular hollows 51A are formed. On each of the first buffers 54b, a projection 54C having a rectangular cross section corresponding to the rectangular hollow 51A is formed. The material of the first buffers 54b is the same material as the buffers 54. The first buffers 54b are made of natural rubber or synthetic rubber such as chloroprene rubber, for example.

The projections 54C are inserted in the hollows 51A with elasticity. Thus, the projections 54C are fixed to the sides of the liquid crystal display unit 51b. One end of each of the first buffers 54b protrudes, as shown in Fig. 6, from the top face of the liquid crystal display unit 51b. Consequently, the transparent member 53 can be supported at its sides by an end of each of the first buffers 54b, and thereby the liquid crystal display unit 51b mounted on the transparent member 53 can be handled easily.

Furthermore, in the slot machine 1b, a product in which the first buffers 54b are mounted to the liquid crystal display unit 51b is inserted in the recess 31B of the frame 31b described later. Consequently, the manufacturing errors of the liquid crystal display unit 51b and the frame 31 are absorbed by the first buffers 54b, and the product can be thus mounted to the frame 31b.

Although the liquid crystal display unit 51b has six first buffers 54b in total including two pairs of first buffers 54b disposed on its long sides and one pair of first buffers 54b disposed on its short sides, the number of the first buffers 54b may be increased or decreased, or mounting intervals between the first buffers 54b may be changed.

To the four corners of the transparent member 53 which is similar to that of the first embodiment, second buffers 55b each being shaped like an triangular prism are mounted. The second buffers 55b are made of natural rubber or synthetic rubber such as chloroprene rubber. Each of the second buffers 55b has an opening, the height of which corresponds to the thickness of the transparent member 53, and the second buffers 55b cover the four corners of the transparent member 53.

The second buffers 55b are mounted to the four corners of the transparent member 53 in view of assemblability. That is, since the second buffers 55b made of rubber have high adhesiveness, the transparent member 53 with the second buffers 55b can be previously assembled as one piece. Consequently, the assembling of the liquid crystal display 5b in the next assembling process becomes easy.

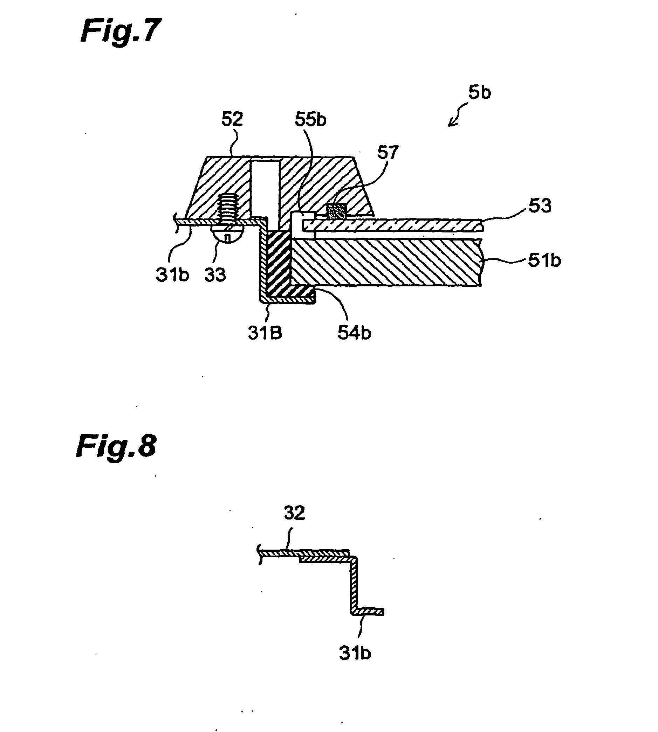

The attachment structure of the liquid crystal display 5b will be described with reference to Fig. 7. Fig. 7 is a partial cross-sectional view of the liquid crystal display 5b of the second embodiment.

As shown in Fig. 7, the frame 31b supports the liquid crystal display unit 51b and the transparent member 53 through the first buffers 54b and the second buffers 55b, respectively. The frame 31b which becomes a component of the door 3b has a recess 31B in which the liquid crystal display unit 51b is set. The first buffers 54b are disposed between the liquid crystal display unit 51b and the inner wall of the frame 31b. In this embodiment too, the recess 31B has an opening so that the back of the liquid crystal display unit 51b is visible.

The transparent member 53 is disposed, as shown in Fig. 6, in front of the liquid crystal display unit 51 in a state that the corners of the transparent member 53 are covered with the second buffers 55b. The cover 52 similar to that of the first embodiment is fixed to the frame 31b with fastening tools such as screws 33, and thereby the liquid crystal display unit 51 and the transparent member 53 can be supported with elasticity between the frame 31 and the cover 52. The transparent member 53 is disposed in front of the liquid crystal display unit 51b via the second buffers 55b, thus being distant from the liquid crystal display unit 51b.

Like the first embodiment, waterproof rubber 57 is previously embedded in the entire peripheral portion between the cover 52 and the transparent member 53.

Fig. 8 depicts the relation between the frame plate and the main frame of the second embodiment. As shown in Fig. 8, the frame 31b is fixed to the main frame 32 of the door 3 by welding. In this case, the frame 31 and the main frame 32 are formed in one piece. Since the frame 31 and the main frame 32 are formed in one piece, it is restricted that the door 3 is twisted or strained by its own weight or externally applied force. Since the frame 31 is formed so as to have a recess like the first embodiment, not only the frame is able to support the liquid crystal display unit 51b, but also the number of bending points of the frame 31 is increased to cause the frame 31 tb resist bending stress and torsion from the viewpoint of structural mechanics.

[Third Embodiment]

A slot machine 1c according to the third embodiment comprises, as shown in Fig. 1, a cabinet 3, a door 3, a top frame 4, a control panel 6, a door component 7, and a medal receiving tray 30 which are similar to those of the first embodiment.

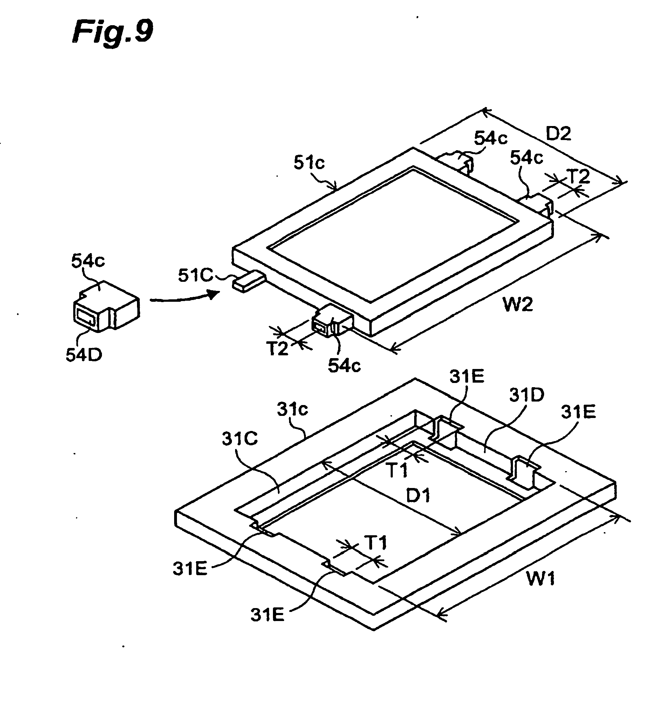

The configuration of the liquid crystal display 5c of the slot machine 1c will be described with reference to Fig. 9, which is an exploded perspective view of the liquid crystal display 5c.

As shown in Fig. 9, the liquid crystal display unit 51c which is a component of the liquid crystal display 5c is formed in one rectangular piece with a display unit and a frame plate surrounding the perimeter of the display unit. The liquid crystal display unit 51c has two pairs of projections 51C, on one pair of its side faces, i.e., end faces, which protrude in the direction perpendicular to the end faces.

As shown in Fig. 9, the buffers 54c are so formed that the width of the end portion is smaller than that of the basal portion. Each of the buffers 54c has a rectangular hole 54D in which the projection 51A is inserted. The buffers 54c are mounted to the projections 51C so as to cover them. The hole 54D for holding the buffer 54c may be a through hole or a counter bore. The material of the buffers 54c is the same material as the buffers 54. The buffers 54c are made of natural rubber or synthetic rubber such as chloroprene rubber, for example. The buffers 54c are set with the projections 51C with elasticity, thereby being fixed to the projections 51C.

The frame 31c which is a component of the door 3 has a recess 31C in which the liquid crystal display unit 51c is set. The recess 31C has a plurality of holes 31E on its inner surfaces 31D, which guide the tips of the buffers 54c and hold the buffers 54c.

The width of each of the holes 31E formed in the frame 31c is T1, and the width of the tip of each of the buffers 54c is T2. The relation between T1 and T2 is T1 > T2. That is, the width T1 of the hole 31E is slightly larger than the width T2 of the tip of each of the buffers 54c.

Further, the width of the recess 31C is W1 and the depth of the recess 31C is D1. On the other hand, the distance between basal portions of a pair of the buffers 54c mounted to the liquid crystal display unit 51c is W2, and the depth of the liquid crystal display unit 51 is D2.

The relation between W1 and W2 is W1 < W2, and the relation between D1 and D2 is D1 > D2. That is, W1 is slightly smaller than W2, and D1 is slightly larger than D2. That is, in a state that the liquid crystal display unit 51c with the buffers 54c is inserted in the recess 31C, the liquid crystal display unit 51c is supported by the frame 31c with elasticity.

In the slot machine 1c, when a product in which the buffers 54c are mounted to the liquid crystal display unit 51c is inserted in the recess 31C of the frame 31c, the manufacturing error of the liquid crystal display unit 51c is absorbed by the buffers 54c, and the product can be thus mounted to the frame 31c.

Although there are four buffers 54c in total, in this embodiment, including two pairs of buffers 54c disposed on the long sides of the liquid crystal display unit 51c, the number of the buffers 54c may be increased or decreased, or mounting intervals between the buffers 54c may be changed.

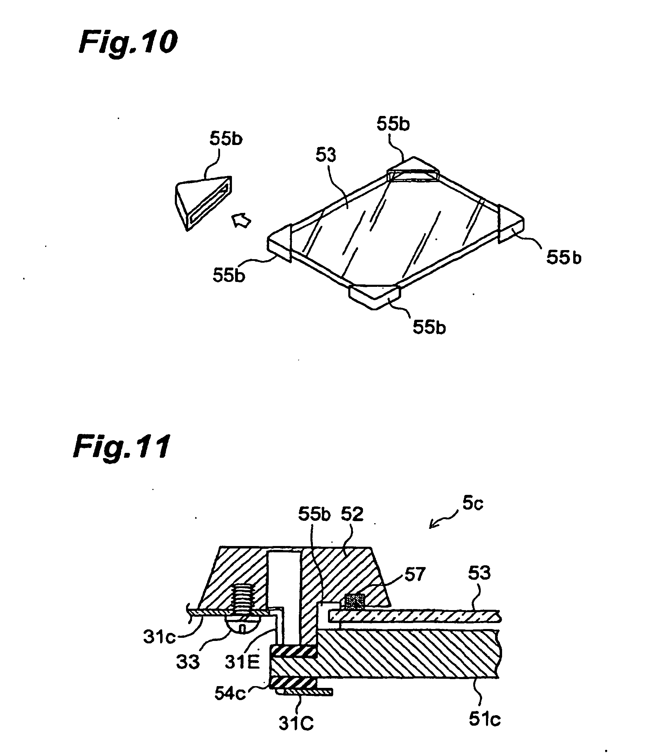

Fig. 10 is a perspective view of the transparent member 53 of the third embodiment. The transparent member 53 is similar to that of the second embodiment, and second buffers 55b similar to those of the second embodiment are mounted to the four corners of the transparent member 53.

The attachment structure of the liquid crystal display 5c will be described with reference to Fig. 11. Fig. 11 is a partial cross-sectional view of the liquid crystal display 5c of the third embodiment.

As shown in Fig. 11, the frame 31c which becomes a component of the door 3 has a recess 31C in which the liquid crystal display unit 51c is set. The buffers 54c are disposed between the liquid crystal display unit 51 and the inner wall of the recess 31C of the frame 31. In this embodiment too, the recess 31C may have an opening so that the back of the liquid crystal display unit 51 is visible.

In order to assemble the liquid crystal display 5c, first, the liquid crystal display unit 51c with the buffers 54c is inserted in the recess 31C of the frame 31c. Next, the transparent member 53 with the second buffers 55b is inserted in the back recess of the cover 52. The cover 52 has an opening from which the front of the liquid crystal display unit 51 is exposed to be able to cover the peripheral portion of the liquid crystal display unit 51 at its front side. Like the first embodiment, waterproof rubber 57 is provided between the cover 52 and the transparent member 53.

Next, the cover 52 with the transparent member 53 is inserted in the recess 31C, and is fixed to the frame 31c with fastening tools such as screws 33 from the back of the frame 31c. Thus, the liquid crystal display unit 51c is supported between the frame 31c and the cover 52 with elasticity. In addition, the second buffers 55b are sandwiched between the cover 52 and the liquid crystal display unit 51c, and the transparent member 53 is thus supported with elasticity.

[Fourth Embodiment]

A slot machine 1d according to the fourth embodiment comprises, as shown in Fig. 1, a cabinet 3, a door 3, a top frame 4, a control panel 6, a door component 7, and a medal receiving tray 30 which are similar to those of the first embodiment.

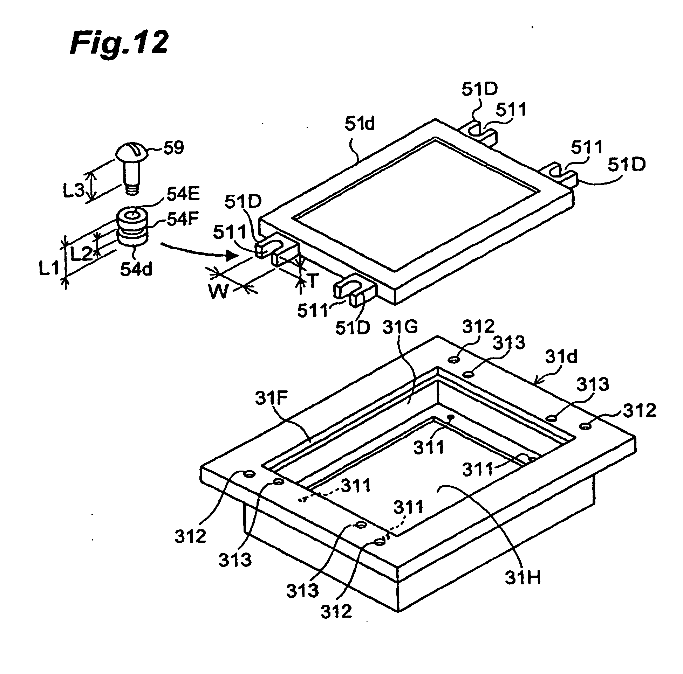

The configuration of the liquid crystal display 5d of the slot machine 1d will be described with reference to Fig. 12, which is an exploded perspective view of the liquid crystal display 5d.

As shown in Fig. 12, the liquid crystal display unit 51d which is a component of the liquid crystal display 5d is formed in one rectangular piece with a display unit and a frame plate surrounding the peripheral portion of the display unit. The liquid crystal display unit 51d has two pairs of projections 51D, on one pair of its side faces, i.e., end faces, which protrude in the direction perpendicular to the end faces.

Each of the plurality of projections 51D has a holding portion 511 for holding the buffer 54d. The holding portion 511 has a groove formed in the shape of a letter U in the projection 51D. That is, as shown in Fig. 12, each of the plurality of projections 51D has a groove formed from the tip toward the basal portion, thus having the holding portion 511.

Each of the cylindrical buffers 54d has a through hole 54E at its center, in which the shank of a stepped screw 59 is inserted. The outer periphery of the buffer 54d has a groove at which the buffer 54d is held by the projection 51D. That is, each of the buffers 54d has a groove for providing the small diameter portion 54F between the large diameter portions disposed at both ends in the longitudinal direction. When the buffer 54d is mounted to the projection 51D, the buffer 54d is guided by the groove formed in the buffer 54d and held by the holding portion 511 of the projection 51D, thus being easily mounted to the projection 51D. Further, in a state that the liquid crystal display unit 51d is mounted to the door 3, impact and vibration directly traveling to the liquid crystal display unit 51d can be weakened by the buffers 54d.

The material of the buffers 54d is the same material as the buffer 54. The buffers 54d are made of natural rubber or synthetic rubber such as chloroprene rubber, for example. The buffers 54d are inserted in the projections 51D with elasticity. That is, the small diameter portion 54F of the buffer 54d is supported with elasticity by the holding portion 511.

The width L2 of the groove formed in the buffer 54d is slightly smaller than the thickness T of the projection 51D, and the outer diameter of the bottom face of the groove is slightly smaller than the width W of the cutout of the projection 51D, That is, the width L2 of the minor-diameter portion 54F of the buffer 54d is slightly smaller than the thickness of the projection 51D, and the outer diameter of the small diameter portion 54F is smaller than the width W of the holding portion 511. The buffer 54d is mounted to the projection 511 in such a way that it is inserted into the holding portion 511 from the tip of the projection 511. As described above, the buffers 54d are previously held in the projections 51D of the liquid crystal display unit 51d, and thereby the liquid crystal display unit 51d is easily mounted to the door 3.

The length L3 of the shank of the stepped screw 59 is slightly smaller than the total length L1 of the buffer 54d. For this reason, when the buffers 54d are held in the holding portions 511 and then fixed to the inner frame 31d described later with the stepped screws 59, the buffers 54d are slightly compressed to be fixed to the inner frame 31d with the stepped screws 59.

The inner frame 31d is shaped like a box having a flange, and has a first recess 31F in which the transparent member 53 (see Fig. 1) is inserted. The inner frame 31d has a second recess 31G, continuously formed on the outer wall of the recess 31F, in which the liquid crystal display unit 51d is inserted.

The second recess 31G has an opening 31H which is formed in its center part and through which the back of the liquid crystal display unit 51 is visible. Further, the second recess 31G has a plurality of screw holes 311 formed in its bottom face each having a female screw matching with the male screw of the stepped screw 59.

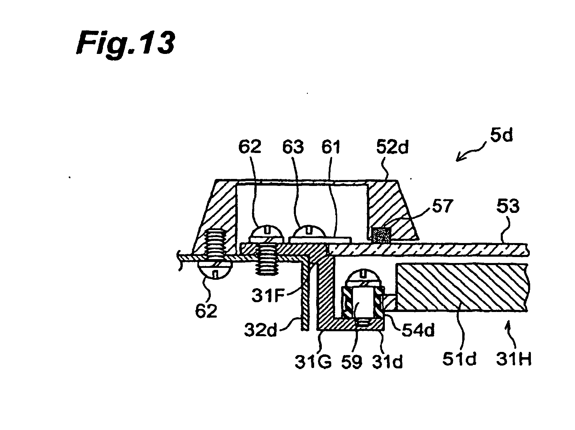

The inner frame 31d has holes 312, which are formed in its flange, for being mounted to the outer frame 32d (described later) which becomes a component of the door 3 (see Fig. 1). Further, the inner frame 31d has screw holes 313, which are formed in its flange, for fixing the transparent member 53 to the inner frame 31d with fixing plates 61 (see Fig. 13). The inner frame 31d is shaped from lightweight aluminum alloy, for example, in one piece.

With reference to Fig. 13, the attachment structure of the liquid crystal display 5d will be described according to the sequence of assembling it. Fig. 13 is a partial cross-sectional view of the liquid crystal display 5d.

First, the buffers 54d are held in the projections 51D of the liquid crystal display unit 51d, and then the liquid crystal display unit 51d is fixed to the recess 31G of the inner frame 31d with stepped screws 59.

Next, the inner frame 31d with which the liquid crystal display unit 51d is fixed is secured to the outer frame 32d, which becomes a component of the door 3 (see Fig. 1), with screws 62. Next, the transparent member 53 is set in the first recess 31F, and then the fixing plates 61 are fixed to the flange with screws 63. Thus, the transparent member 53 is supported by the inner frame 31d.

The transparent member 53 is disposed apart from the front of the liquid crystal display unit 51d in this way, and thereby it is prevented that any article directly comes in contact with the liquid crystal display unit 51d. The transparent member 53 allows the light from the liquid crystal display unit 51d to pass through it, thereby not obstructing the display of the liquid crystal display unit 51d.

The transparent member 53 is a glass plate or a touch panel. In the case of a glass plate, materials for it can be got at low price. In the case of a touch panel, switch functions can be added.

As the fixing plates 61, four plates may be used each of which is fixed to the inner frame 31d with a screw 63 using any one of the four screw holes 313. Alternatively, as the fixing plates 61, two long plates may be used each of which is fixed to the inner frame 31d with two screws 63 using any pair of the four screw holes 313. Moreover, as the fixing plates 61, one rectangular plate may also be used which has a rectangular opening at its center part and is fixed to the inner frame 31d with four screws 63 using the four screw holes 313.

According to the size of the transparent member 53, each of the long fixing plates 61 may be fixed to the inner frame 31d with three screws, or the one piece of the rectangular fixing plate 61 may be fixed to the inner frame 31d with six screws. The fixing plates 61 are preferably made of hard synthetic resin, for example, so as not to press and damage the transparent member 53.

Next, the cover 52d having an opening at its center part is fixed to the outer frame 32d with screws 62. That is, the cover 52d has an opening from which the front of the liquid crystal display unit 51d is exposed, and is able to cover the peripheral portion of the liquid crystal display unit 51d at its front. Since the outer frame 32d is directly fixed to the cover 52d as described above, any bezel or the like is not required, and the number of parts can be reduced accordingly.

Waterproof rubber 57 is embedded in the entire peripheral portion of the surface of the cover 52d opposite to the transparent member 53. The waterproof rubber 57 can exert its buffer function for the transparent member 53 in addition to its essential waterproof function.

As shown in Fig. 13, in a state that the inner frame 31d is fixed to the outer frame 32d, the inner frame 31d and the outer frame 32d constitute the frame of the door 3 as one piece. The door 3 has many bending points, and thus the shape of the door 3 itself is prevented from being twisted or strained by its own weight or externally applied force from the viewpoint of structural mechanics.

Since the liquid crystal display unit 51d is supported with elasticity through the buffers 54d by the door 3, energy caused by the impact force generated when the door 3 is opened or closed is reduced by the buffers 54d. Consequently, the liquid crystal display unit 51 is not easily damaged.

Furthermore, since the liquid crystal display 5d has assembling structure shown in Fig. 13, the inner frame 31d supporting the liquid crystal display unit 51d, and the transparent member 53 can be assembled at the front of the door 3. Thus, this slot machine 1d can be easily assembled.

[Fifth Embodiment]

A slot machine 1e according to the fifth embodiment comprises, as shown in Fig. 1, a cabinet 3, a door 3, a top frame 4, a control panel 6, a door component 7, and a medal receiving tray 30 which are similar to those of the first embodiment.

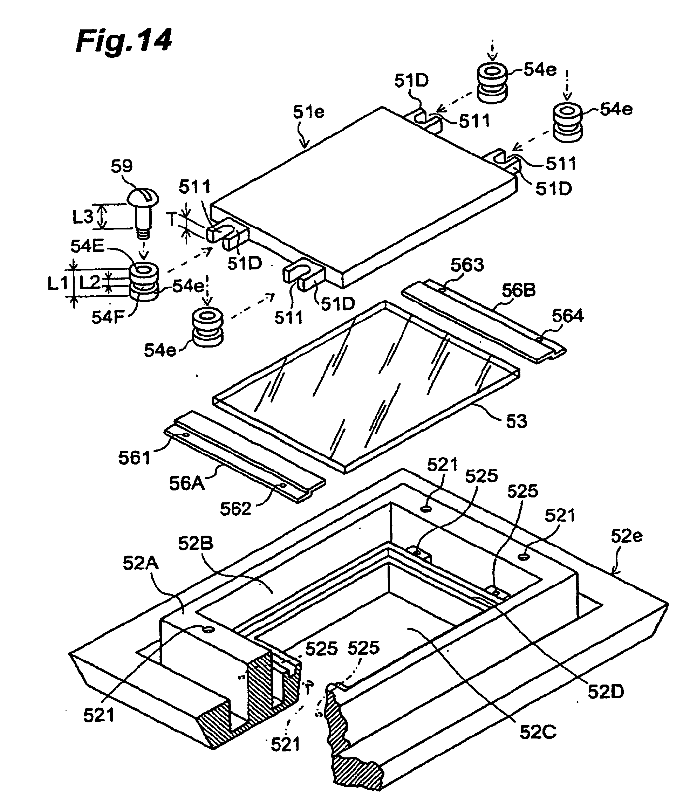

The configuration of the liquid crystal display 5e of the slot machine 1e will be described with reference to Fig. 14, which is an exploded perspective view of the liquid crystal display 5e.

As shown in Fig. 14, the liquid crystal display 5e has a liquid crystal display unit 51e similar to the liquid crystal display unit 51d of the fourth embodiment, and buffers 54e similar to the buffers 54d of the fourth embodiment. The buffers 54e are slightly compressed when being fixed to the protrusion 52A of the cover 52e described later with stepped screws 59.

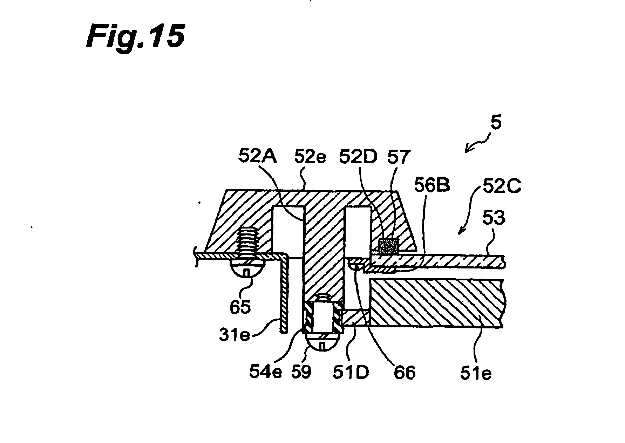

The state shown in Fig. 14 is a state that the cover 52e is seen from its back. The cover 52e has a rectangular flange constituting the outer portion of the cover 52e. The cover 52e has a rectangular protrusion 52A protruding backward at the inside of the flange. On the top face, i.e., end face of the protrusion 52A, a plurality of screw holes 521 are formed each having a female screw matching with the male screw of the stepped screw 59(see Fig. 15). On the top face of the protrusion 52A, the liquid crystal display unit 51e will be mounted.

Inside the protrusion 52A, a rectangular recess 52B is formed. On the bottom face of the recess 52B, screw holes 525 are formed each having a female screw for fixing the transparent member 53 through the frame plates 56A and 56B. The transparent member 53 will be inserted in the recess 52B and then fixed to the bottom face of the recess 52B by the frame plates 56A and 56B so as to be sandwiched by them.

The frame plates 56A and 56B are stepped long plates. The frame plate 56A and the frame plate 56B are disposed in parallel at both sides of the transparent member 53 so as to face each other. The frame plates 56A and 56B have holes 561 and 562, and holes 563 and 564, respectively, in which screws 66 described later are inserted. The frame plates 56A and 56B are preferably made of hard synthetic resin, for example, so as not to press and damage the transparent member 53.

The transparent member 53 is a glass plate or a touch panel. In the case of a glass plate, materials for it can be got at low price. In the case of a touch panel, switch functions can be added.

The bottom face of the recess 52B has an opening 52C at its center part, and a groove 52D formed in its entire peripheral portion, in which waterproof rubber 57 described later is embedded.

The cover 52e may be shaped from aluminum alloy in one piece. Further, the cover 52e may be shaped from hard synthetic resin in one piece. In this case, the cover 52e can be made light. If the cover 52e is made of synthetic resin, a metal nut may be press-fitted in each of the female screw portions so that the screw threads of the female screw portions are not damaged.

Next, the attachment structure of the liquid crystal display 5e will be described with reference to Fig. 15, which is a partial cross-sectional view of the liquid crystal display 5e. The attachment structure of the liquid crystal display 5e will be described according to the sequence of assembling it.

First, the waterproof rubber 57 is embedded in the groove 52D of the cover 52e. The waterproof rubber 57 may be fixed to the groove 52D with adhesive or the like so as not to peel off from the groove 52D. Next, the transparent member 53 is put on the waterproof rubber 57, the frame plate 56A and the frame plate 56B are disposed at both sides of the transparent member 53, and the transparent member 53 is fixed to the cover 52e with screws 59.

The transparent member 53 is fixed to the cover 52e via the waterproof rubber 57 in such a manner that the waterproof rubber 57 comes in elastic and intimate contact with the surface of the transparent member 53. The waterproof rubber 57 exerts its buffer function for the transparent member 53 in addition to its essential waterproof function between the cover 52e and the transparent member 53. The waterproof rubber 57 absorbs the energy caused by impact and the like to prevent the transparent member 53 (e.g. a glass component) from being damaged.

Next, the liquid crystal display unit 51e with the buffers 54e is fixed to the top face of the protrusion 52A of the cover 52e with stepped screws 59. Next, the cover 52e to which the liquid crystal display unit 51e and the transparent member 53 are fixed is mounted to the frame 31e which becomes a component of the door 3 (see Fig. 1), and then fixed to the frame plate 31e with screws 65.

The frame 31e is bent to reinforce its structure in order to prevent the door 3 in an open state from being twisted or strained. Furthermore, in a state that the frame 31e is fixed to the cover 52, the cover 52e and the frame 31e are assumed to be structurally integrated, so that the strength of the door 3 against torsion and strain is enhanced.

The liquid crystal display unit 51e is supported with elasticity through the buffers 54e by the cover 52e constituting the door 3. Thus, the energy caused by the impact force generated when the door 3 is opened or closed is weakened by the buffers 54e, and thereby the liquid crystal display unit 51 is not easily damaged.

Furthermore, since the transparent member 53 is disposed in front of the liquid crystal display unit 51e, it is prevented that any article directly comes in contact with the liquid crystal display unit 51e. The transparent member 53 allows the light from the liquid crystal display unit 51e to pass through it, thereby not obstructing the display of the liquid display unit 51e.

[Sixth Embodiment]

A slot machine 1f according to the sixth embodiment comprises, as shown in Fig. 1, a cabinet 3, a door 3, a top frame 4, a control panel 6, a door component 7, and a medal receiving tray 30 which are similar to those of the first embodiment.

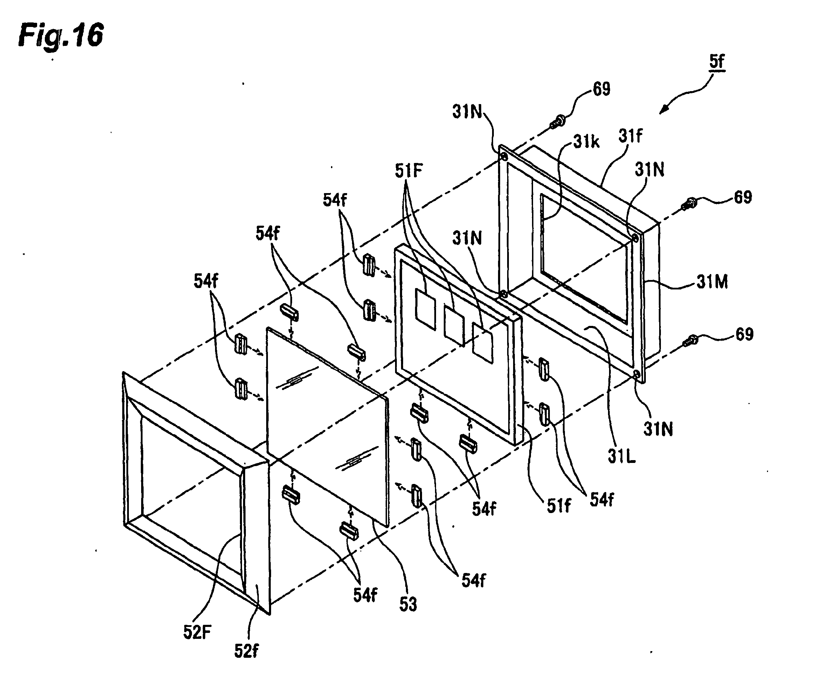

The configuration of the liquid crystal display 5f of the slot machine 1f will be described with reference to Fig. 16, which is an exploded perspective view of the liquid crystal display 5f.

As shown in Fig. 16, the liquid crystal display unit 51f which is a component of the liquid crystal display 5f is formed in one rectangular piece with a display unit and a frame plate surrounding the peripheral portion of the display unit. The liquid crystal display unit 51f has three windows 51F. The windows 51F allow the light from the back of the liquid crystal display unit 51f to pass through to its front. The windows 51F are provided to allow the symbols on the reels 9 (see Fig. 2) to be seen. The liquid crystal display units of the first to fifth embodiments may also have windows similar to those of this embodiment.

Buffers 54f are fixed to edges of the liquid crystal display unit 51f. A total of six buffers 54f are fixed to three edges of the liquid crystal display unit 51f. The cross section of each of the buffers 54f is shaped like a letter L. Each of the buffers 54f is provided so as to come in contact with the back and a side of the liquid crystal display unit 51f at its edge. The buffers 54f are made of natural rubber or synthetic rubber such as chloroprene rubber.

In front of the liquid crystal display unit 51f, a transparent member 53 similar to that of the first embodiment is provided. On the four edges of the transparent member 53, a eight buffers 54f are provided. Note that the material of the buffers 54f provided to the transparent member 53 may be different from the material of the buffers 54f provided to the liquid crystal display unit 51f. Each of the buffers 54f is provided so as to come in contact with the back and a side of the transparent member 53 at its edge. The buffers 54f which are provided so as to come in contact with the back of the transparent member 53 are disposed between the liquid crystal display unit 51f and the transparent member 53. Thus, the liquid crystal display unit 51f and the transparent member 53 are disposed apart from each other by the buffers 54f when the liquid crystal display unit 51f and the transparent member 53 are accommodated in the frame 31f.

The frame 31f has a recess 31L. The liquid crystal display unit 51f and the transparent member 53 are accommodated in the recess 31L. That is, the frame 31f supports the liquid crystal display unit 51f at its back.

The recess 31L has an opening 31K on its bottom face, which allows the reels 9 to be seen. Further, the frame 31f has a flange 31M connecting to the open end of the recess 31L. The flange 31M has holes 31N in which screws 69 are inserted. The screws 69 are screwed into the cover 52 supporting the liquid crystal display unit 52f at its front.

The cover 52f has a frame portion 52F covering the peripheral portion of the liquid crystal display unit. The liquid crystal display unit 51F can be seen from the opening surrounded by the inner edges of the frame portion 52F.

In the liquid crystal display 5f, the liquid crystal display unit 51f and the transparent member 53 are sandwiched between and supported by the frame 31f and the cover 52f. Thus, the liquid crystal display 5f requires fewer components for supporting the liquid crystal display unit 51f and the transparent member 53.

Furthermore, the liquid crystal display unit 51f is supported through the buffers 54f, thereby being not damaged easily by the impact or the like from the door 3. In addition, the transparent member 53 is provided apart from the front of the liquid crystal display unit 51f, thereby protecting the front of the liquid crystal display unit 51f.

The principles of the present invention have been illustrated and described in the preferred embodiments, but it is apparent to a person skilled in the art that the present invention can be modified in arrangement and detail without departing from such principles. We, therefore, claim rights to all variations and modifications coming with the scope of claims.

## Claims

1. A gaming machine comprising:
a cabinet (2);
a door (3) openably and closably supported by the cabinet, the door comprising a frame (31; 31b; 31c; 31d; 31f);
a liquid crystal display unit (51; 51b; 51c; 51d; 51f) which is supported by the frame of the door and provides an image associated with a game; and
a transparent member (53) which is supported by the door;
**characterized by**
a buffer (54; 54b; 54c; 54d; 54f) provided between the liquid crystal display unit and the frame of the door.

2. The gaming machine according to claim 1, wherein the liquid crystal display unit (54) is supported by the frame (31) at a back thereof, and
the buffer (54; 55; 56) supports the liquid crystal display unit and the transparent member keeping a distance therebetween.

3. The gaming machine according to claim 1 or 2, wherein the buffer (54; 55; 56) has a first groove (548; 558; 568) in which the liquid crystal display unit (51) is inserted and a second groove (54A; 55A; 56A) distant from the first groove in which the transparent member (53) is inserted.

4. The gaming machine according to claim 1, wherein the liquid crystal display unit (51b) is supported by the frame (31b) at a back thereof and
the buffer (54b) is in contact with the liquid crystal display unit and the frame.

5. The gaming machine according to claim 4, wherein an end face of the liquid crystal display unit (51b) has a hollow (51A) extending in a direction perpendicular to the end face, and
the buffer (54b) has a projection (54c) of which shape corresponds to a shape of the hollow; and
the projection (54c) is inserted in the hollow (51A).

6. The gaming machine according to claim 1, wherein the liquid crystal display unit (51c) is supported by the frame (31c) at a back thereof
the liquid crystal display unit has at least one projection (51c) on an end face thereof, the projection projects in a direction perpendicular to the end face, and
the buffer (54c) covers the projection.

7. The gaming machine according to claim 6, wherein the frame (31c) has a hole (31E) in which the buffer is set.

8. The gaming machine according to any one of claims 4 to 7,
wherein the transparent member (53) has at least one corner, and
the gaming machine further comprising a second buffer (55b) which covers the corner of the transparent member.

9. The gaming machine according to any one of claims 2 to 8, wherein the frame (31, 31b, 31c) has a recess (31A; 31B; 31C) in which the liquid crystal display unit (51, 51b, 51c) is held by the buffer (54, 54b, 54c) is set.

10. The gaming machine according to claim 1, wherein the liquid crystal display unit (51d) is supported by the frame (31d; 32d) at a back thereof,
the liquid crystal display unit (51d) has at least one projection (51D) on an end face thereof, the projection projects in a direction perpendicular to the end face and
the buffer (54d) holds the projection.

11. The gaming machine according to claim 10, wherein the frame (31d) includes an outer frame (32d) and an inner frame (31d) which is fixed to the outer frame; and
the buffer (54d) is fixed to the inner frame.

12. The gaming machine according to any one of claims 2 to 11,
wherein the door (3) further includes a cover (52, 52b, 52c, 52d, 52f) being supported by the frame, the cover has an opening at its center
a front of the liquid crystal display unit (51, 51b, 51c, 51d, 51f) is exposed from the cover through the transparent member (53), and
a peripheral portion of the liquid crystal display unit is covered by the cover at the front thereof.

13. A gaming machine comprising:
a cabinet (2);
a door (3) openably and closably supported by the cabinet, the door comprising a frame (31e);
a liquid crystal display unit (51e) providing an image associated with the game;
a transparent member (53) which is supported by the door;
**characterized by**
a buffer (54e) provided between the liquid crystal display unit and a cover of the door covering the peripheral portion of the liquid display unit and having at its center an opening, wherein the liquid crystal display unit is supported by the cover through the buffer and the cover is supported by the frame.

14. The gaming machine according to claim 13, wherein the display unit is exposed from the opening through the transparent member,
the liquid crystal display unit has at least one projection on an end face thereof, the projection projects in a direction perpendicular to the end face,
the buffer holds the projection.

15. The gaming machine according to any one of claims 10, 11 and 14,
wherein the projection (51D) has a holding portion (511) for holding the buffer (54f; 54e), and
the buffer is held by the holding portion.

16. The gaming machine according to claim 15, wherein the holding portion (511) includes a cutout provided at a tip of the projection (51D),
the buffer includes a groove (54F) which is shaped in such a way that the width of part of the buffer is equal to the width of the cutout and the width of the groove corresponds to the thickness of the projection, and
the holding portion is set in the groove of the buffer.

17. The gaming machine according to any one of claims 13 to 16, further comprising a sealing member,
wherein the sealing member (57) is in intimate contact with the peripheral portion of the transparent member and the cover.

18. The gaming machine according to any one of claims 1 to 17, wherein the transparent member (53) is a glass plate or a touch panel.

19. The gaming machine according to any one of claims 1 to 18, wherein a plurality of buffers each being identical with the buffer are provided.

## Patentansprüche

1. Spielautomat, umfassend:
ein Gehäuse (2);
eine Tür (3), die durch das Gehäuse gehaltert geöffnet und geschlossen werden kann, wobei die Tür einen Rahmen (31; 31b; 31c; 31d; 31f) umfasst;
eine LCD-Einheit (51; 41b; 51c; 51d; 51f), die durch den Rahmen der Tür gehaltert ist und ein zu einem Spiel gehöriges Bild bereitstellt; und
ein transparentes Element (53), das durch die Tür gehaltert ist;
**gekennzeichnet durch**
einen Dämpfer (54; 54b; 54c; 54d; 54f), der zwischen der LCD-Einheit und dem Rahmen der Tür vorgesehen ist.

2. Spielautomat nach Anspruch 1, bei dem die LCD-Einheit (54) durch den Rahmen (31) an seiner Rückseite gehaltert ist, und
der Dämpfer (54; 55; 56) die LCD-Einheit und das transparente Element unter Einhaltung eines Abstands dazwischen haltert.

3. Spielautomat nach Anspruch 1 oder 2, bei dem der Dämpfer (54; 55; 56) eine erste Nut (548; 558; 568) aufweist, in die die LCD-Einheit (51) eingeführt ist, und eine zweite Nut (54A; 55A; 56A) beabstandet von der ersten Nut aufweist, in die das transparente Element (53) eingeführt ist.

4. Spielautomat nach Anspruch 1, bei dem die LCD-Einheit (51b) durch den Rahmen (31b) an seiner Rückseite gehaltert ist und
der Dämpfer (54b) in Kontakt mit der LCD-Einheit und dem Rahmen steht.

5. Spielautomat nach Anspruch 4, bei dem eine Stirnfläche der LCD-Einheit (51b) einen Hohlraum (51a) aufweist, der sich in einer Richtung senkrecht zur Stirnfläche erstreckt, und
der Dämpfer (54b) einen Vorsprung (54c) in einer Form, die der Form des Hohlraums entspricht, aufweist; und
der Vorsprung (54c) in den Hohlraum (51A) eingeführt ist.

6. Spielautomat nach Anspruch 1, bei dem die LCD-Einheit (51c) durch den Rahmen (31c) an seiner Rückseite gehaltert ist;
die LCD-Einheit wenigstens einen Vorsprung (51c) auf einer ihrer Stirnflächen aufweist, wobei der Vorsprung in einer Richtung senkrecht zur Stirnfläche vorragt, und
der Dämpfer (54c) den Vorsprung bedeckt.

7. Spielautomat nach Anspruch 6, bei dem der Rahmen (31c) ein Loch (31E) aufweist, in den der Dämpfer eingesetzt ist.

8. Spielautomat nach einem der Ansprüche 4 bis 7, bei dem das transparente Element (53) wenigstens eine Ecke aufweist und der Spielautomat ferner einen zweiten Dämpfer (55b) umfasst, der die Ecke des transparenten Elements bedeckt.

9. Spielautomat nach einem der Ansprüche 2 bis 8, bei dem der Rahmen (31, 31b, 31c) eine Vertiefung (31A; 31B; 31C) aufweist, in die die LCD-Einheit (51, 51b, 51c), die durch den Dämpfer (54, 54b, 54c) gehalten ist, eingesetzt ist.

10. Spielautomat nach Anspruch 1, bei dem die LCD-Einheit (51d) durch den Rahmen (31d; 32d) an seiner Rückseite gehaltert ist,
die LCD-Einheit (51D) wenigstens einen Vorsprung (51D) auf ihrer Stirnfläche aufweist, wobei der Vorsprung in einer Richtung senkrecht zur Stirnfläche vorragt, und
der Dämpfer (54d) den Vorsprung hält.

11. Spielautomat nach Anspruch 10, bei dem der Rahmen (31d) einen äußeren Rahmen (32d) und einen inneren Rahmen (31d), der an dem äußeren Rahmen befestigt ist, umfasst; und
der Dämpfer (54d) an dem inneren Rahmen befestigt ist.

12. Spielautomat nach einem der Ansprüche 2 bis 11, bei dem die Tür (3) ferner eine Abdeckung (52, 52b, 52c, 52d, 52f) umfasst, die durch den Rahmen gehaltert ist, wobei die Abdeckung in ihrer Mitte eine Öffnung aufweist,
eine Vorderseite der LCD-Einheit (51, 51b, 51c, 51d, 51f) durch das transparente Element (53) gegenüber der Abdeckung frei liegt, und
ein Umfangsabschnitt der LCD-Einheit an ihrer Vorderseite durch die Abdeckung bedeckt ist.

13. Spielautomat, umfassend:
ein Gehäuse (2);
eine Tür (3), die durch das Gehäuse gehaltert geöffnet und geschlossen werden kann, wobei die Tür einen Rahmen (31e) umfasst;
eine LCD-Einheit (51e), die ein zum Spiel gehöriges Bild bereitstellt;
ein transparentes Element (53), das durch die Tür gehaltert ist;
**gekennzeichnet durch**
einen Dämpfer (54e), der zwischen der LCD-Einheit und einer Abdeckung der Tür, die den Umfangsabschnitt der LCD-Einheit gedeckt und in ihrer Mitte eine Öffnung aufweist, vorgesehen ist, wobei die LCD-Einheit über den Dämpfer **durch** die Abdeckung gehaltert ist und die Abdeckung **durch** den Rahmen gehaltert ist.

14. Spielautomat nach Anspruch 13, bei dem die LCD-Einheit durch die Öffnung über das transparente Element frei liegt,
die LCD-Einheit wenigstens einen Vorsprung auf ihrer Stirnfläche aufweist, die in einer Richtung senkrecht zur Stirnfläche vorragt,
der Dämpfer den Vorsprung hält.

15. Spielautomat nach einem der Ansprüche 10, 11 und 14,
bei dem der Vorsprung (51D) einen Halteabschnitt (511) zum Halten des Dämpfers (54f; 54e) aufweist, und
der Dämpfer durch den Halteabschnitt gehalten wird.

16. Spielautomat nach Anspruch 15, bei dem der Halteabschnitt (511) eine Aussparung, die an einem Vorderende des Vorsprungs (51D) vorgesehen ist, umfasst,
der Dämpfer eine Nut (54F) umfasst, die derart geformt ist, dass die Breite des Teils des Dämpfers gleich der Breite der Aussparung ist und die Breite der Nut der Stärke des Vorsprungs entspricht, und
der Halteabschnitt in die Nut des Dämpfers eingesetzt ist.

17. Spielautomat nach einem der Ansprüche 13 bis 16, ferner umfassend ein Dichtungselement,
wobei das Dichtungselement (57) in engem Kontakt mit dem Umfangsabschnitt des transparenten Elements und der Abdeckung steht.

18. Spielautomat nach einem der Ansprüche 1 bis 17, bei dem das transparente Element (53) eine Glasplatte oder ein Touch-Panel ist.

19. Spielautomat nach einem der Ansprüche 1 bis 18, bei dem mehrere Dämpfer vorgesehen sind, die jeweils identisch mit dem Dämpfer sind.

## Revendications

1. Machine de jeu comprenant :
un cabinet (2) ;
une porte (3) supportée en ouverture et en fermeture par le cabinet, la porte comprenant un cadre (31 ; 31b ; 31c ; 31d ; 31f) ;
une unité d'affichage à cristaux liquides (51 ; 51b ; 51c ; 51d ; 51f) qui est supportée par le cadre de la porte et fournie une image associée à un jeu ; et
un organe transparent (53) qui est supporté par la porte;
**caractérisé par**
un dispositif tampon (54; 54b ; 54c ; 54d; 54f) fourni entre l'unité d'affichage à cristaux liquides et le cadre de la porte.

2. Machine de jeu selon la revendication 1, où l'unité d'affichage à cristaux liquides (54) est supportée par le cadre (31) à un revers de celui-ci, et
le dispositif tampon (54 ; 55 ; 56) supporte l'unité d'affichage à cristaux liquides et l'organe transparent gardant une distance entre eux.

3. Machine de jeu selon la revendication 1 ou 2, où le dispositif tampon (54 ; 55 ; 56) a une première rainure (548 ; 558 ; 568) dans laquelle l'unité d'affichage à cristaux liquides (51) est insérée et une deuxième rainure (54A; 55A ; 56A) distante de la première rainure dans laquelle l'organe transparent (53) est inséré.

4. Machine de jeu selon la revendication 1, où l'unité d'affichage à cristaux liquides (51b) est supportée par le cadre (31b) à un revers de celui-ci et
le dispositif tampon (54b) est en contact avec l'unité d'affichage à cristaux liquides et le cadre.

5. Machine de jeu selon la revendication 4, où une face d'extrémité de l'unité d'affichage à cristaux liquides (51b) a un creux (51A) s'étendant dans une direction perpendiculaire à la face d'extrémité, et
le dispositif tampon (54b) a une projection (54c) dont la forme correspond à une forme du creux ; et
la projection (54c) est insérée dans le creux (51A).

6. Machine de jeu selon la revendication 1, où l'unité d'affichage à cristaux liquides (51c) est supportée par le cadre (31c) à un revers de celui-ci
l'unité d'affichage à cristaux liquides a au moins une projection (51c) sur une de ses faces d'extrémité, la projection se projetant dans une direction perpendiculaire à la face d'extrémité, et
le dispositif tampon (54c) couvre la projection.

7. Machine de jeu selon la revendication 6, où le cadre (31c) a un trou (31E) dans lequel le dispositif tampon est disposé.

8. Machine de jeu selon l'une quelconque des revendications 4 à 7,
où l'organe transparent (53) a au moins un coin, et
la machine de jeu comprenant en outre un deuxième dispositif tampon (55b) qui couvre le coin de l'organe transparent.

9. Machine de jeu selon l'une quelconque des revendications 2 à 8, où le cadre (31 ; 31b ; 31c) a un évidement (31A ; 31B ; 31C) dans lequel l'unité d'affichage à cristaux liquides (51 ; 51b ; 51c) est maintenue par le dispositif tampon (54 ; 54b ; 54c) est disposée.

10. Machine de jeu selon la revendication 1, où l'unité d'affichage cristaux liquides (51 d) est supportée par le cadre (31d ; 32d) à un revers de celui-ci,
l'unité d'affichage à cristaux liquides (51d) a au moins une projection (51D) sur une de ses faces d'extrémité, la projection se projetant dans une direction perpendiculaire à la face d'extrémité et
le dispositif tampon (54d) maintient la projection.

11. Machine de jeu selon la revendication 10, où le cadre (31d) inclut un cadre externe (32d) et un cadre interne (31d) qui est fixé au cadre externe ; et
le dispositif tampon est fixé au cadre interne.

12. Machine de jeu selon l'une quelconque des revendications 2 à 11,
où la porte (3) inclue en outre un couvercle (52, 52b, 52c, 52d, 52f) supporté par le cadre, le couvercle a une ouverture en son centre
une face avant de l'unité d'affichage à cristaux liquides (51, 51b, 51c, 51d, 51f) est exposée du couvercle à l'organe transparent (53), et
une portion périphérique de l'unité d'affichage à cristaux liquides est couverte par le couvercle à sa face avant.

13. Machine de jeu comprenant :
un cabinet (2) ;
une porte (3) supportée en ouverture et en fermeture par le cabinet, la porte comprenant un cadre (31e) ;
une unité d'affichage à cristaux liquides (51e) fournissant une image associée avec le jeu ;
un organe transparent (53) qui est supporté par la porte ;
**caractérisé par**
un dispositif tampon (54e) fourni entre l'unité d'affichage à cristaux liquides et un couvercle de la porte couvrant la portion périphérique de l'unité d'affichage à cristaux liquides et ayant en son centre une ouverture, où l'unité d'affichage à cristaux liquides est supportée par le couvercle à travers le dispositif tampon et le couvercle est supporté par le cadre.

14. Machine de jeu selon la revendication 13, où l'unité d'affichage est exposée de l'ouverture à l'organe transparent,
l'unité d'affichage à cristaux liquides a au moins une projection sur une de ses faces d'extrémité, la projection se projetant dans une direction perpendiculaire à la face d'extrémité,
le dispositif tampon maintient la projection.

15. Machine de jeu selon l'une quelconque des revendications 10, 11 et 14,
où la projection (51D) a une portion de maintien (511) pour maintenir le dispositif tampon (54f ; 54e), et
le dispositif tampon est maintenu par la portion de maintien.

16. Machine de jeu selon la revendication 15, où la portion de maintien (511) inclue un découpage fourni à une pointe de la projection (51D),
le dispositif tampon inclut une rainure (54F) qui est formée de telle façon que la largeur d'une partie du dispositif tampon est égale à la largeur du découpage et la largeur de la rainure correspond à l'épaisseur de la projection, et
la portion de maintien est disposée dans la rainure du dispositif tampon.

17. Machine de jeu selon l'une quelconque des revendications 13 à 16, comprenant en outre un organe d'étanchéité,
où l'organe d'étanchéité (57) est en contact intime avec la portion périphérique de l'organe transparent et le couvercle.

18. Machine de jeu selon l'une quelconque des revendications 1 à 17, où l'organe transparent (53) est une plaque en verre ou un écran tactile.

19. Machine de jeu selon l'une quelconque des revendications 1 à 18, où une pluralité de dispositifs tampons chacun étant identique au dispositif tampon sont fournis.
